# FASCICULE DE BREVET EUROPEEN

(11) **EP 4 151 519 B1**
(45) Date de publication et mention de la délivrance du brevet: **19.08.2026**
(21) Numéro de dépôt: 22194721.1
(22) Date de dépôt: 08.09.2022
(51) Int. Cl.: B64C 1/00, B64C 3/10

(54) **AÉRONEF COMPRENANT UN FUSELAGE ET DES AILES PRÉSENTANT CHACUNE UNE PARTIE EXTERNE ET UNE PARTIE INTERNE ÉLARGIE ENTRE LE FUSELAGE ET LA PARTIE EXTERNE**
LUFTFAHRZEUG MIT EINEM RUMPF UND TRAGFLÄCHEN, DIE JEWEILS EINEN ÄUSSEREN TEIL UND EINEN VERBREITERTEN INNEREN TEIL ZWISCHEN DEM RUMPF UND DEM ÄUSSEREN TEIL AUFWEISEN
AIRCRAFT INCLUDING A FUSELAGE AND WINGS, EACH HAVING AN EXTERNAL PORTION AND AN EXTENDED INTERNAL PORTION BETWEEN THE FUSELAGE AND THE EXTERNAL PORTION

(30) Priorité: 16.09.2021 FR 2109742
(43) Date de publication de la demande: 22.03.2023
(73) Titulaire: Airbus SAS, 31700 Blagnac (FR); Airbus Operations SAS, 31060 Toulouse (FR)
(72) Inventeur: BOOTH, Andrew, 31700 BLAGNAC CEDEX (FR); LAVERNE, Julien, 31060 TOULOUSE (FR); FORBES, Alistair, 31060 TOULOUSE (FR)
(74) Mandataire: Fantin, Laurent

(56) Documents cités:
- EP-A2- 1 247 734
- FR-A1- 3 000 023
- RU-C1- 2 668 000
- US-A- 1 862 102
- US-A1- 2015 336 680

## Description

La présente demande se rapporte à un aéronef comprenant un fuselage et des ailes présentant chacune une partie externe et une partie interne élargie entre le fuselage et la partie externe.

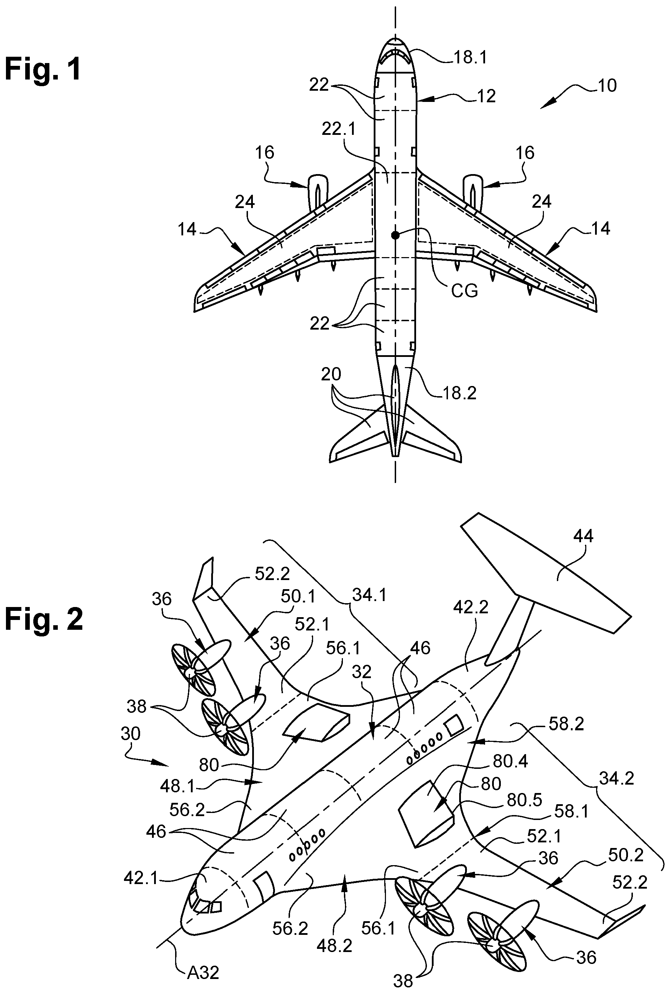

Selon un premier mode de réalisation de l'art antérieur visible sur la figure 1, un aéronef 10 comprend un fuselage 12, des ailes 14 positionnées de part et d'autre du fuselage 12 ainsi que des ensembles propulseurs 16 reliés aux ailes 14. Le fuselage 12 comprend une pointe avant 18.1 dans laquelle est positionnée une cabine de pilotage, une pointe arrière 18.2 supportant un empennage 20 ainsi que plusieurs tronçons 22 approximativement cylindriques positionnés entre les pointes avant et arrière 18.1, 18.2. Un des tronçons 22 présente un caisson central de voilure permettant de relier les ailes 14 au fuselage 12. Les ailes 14 sont reliées au même et unique tronçon 22.1 du fuselage et seulement à la partie inférieure de ce tronçon 22.1. Chaque aile 14 présente une forme en caisson et comprend au moins un réservoir de carburant 24 qui s'étend sur quasiment toute la longueur de l'aile 14.

Ce premier mode de réalisation permet d'utiliser des techniques d'assemblage parfaitement maîtrisées. De plus, la forme cylindrique du fuselage 12 est adaptée aux infrastructures existantes des aéroports.

Selon ce premier mode de réalisation, chaque aile 14 présente une flèche qui induit des effets non négligeables sur la position du centre de gravité CG de l'aéronef 10 et sur sa stabilité lorsque le niveau du carburant varie dans les réservoirs de carburant 24 situés dans les ailes en fonctionnement.

Selon un deuxième mode de réalisation de l'art antérieur décrit dans les documents EP1247734, FR3000023 et RU2668000, l'aéronef présente un profil d'aile volante. Ce deuxième mode de réalisation permet de pouvoir positionner les réservoirs proches du centre de gravité. Toutefois, ce profil d'aile volante n'est pas adapté aux structures existantes des aéroports et nécessite de totalement modifier les chaînes d'assemblage existantes.

Selon un autre mode de réalisation de l'art antérieur visible dans le document US1862102, un aéronef comprend de part et d'autre du fuselage des ailes épaisses. Toutefois, la structure du fuselage de cet aéronef est très différente de celles des aéronefs actuels si bien qu'il est nécessaire de totalement modifier les chaînes d'assemblage existantes.

La présente invention vise à remédier à tout ou partie des inconvénients de l'art antérieur. A cet effet, l'invention a pour objet un aéronef comprenant un fuselage, des première et deuxième ailes positionnées de part et d'autre du fuselage, le fuselage présentant un axe longitudinal, le fuselage comprenant une pointe avant, une pointe arrière supportant un empennage ainsi qu'au moins un tronçon approximativement cylindrique présentant une hauteur correspondant à une hauteur de fuselage, ledit tronçon étant positionné entre les pointes avant et arrière, chaque aile comprenant une partie interne et une partie externe telles que chaque partie interne relie la partie externe correspondante et le fuselage, chaque partie interne comprenant une première extrémité qui présente une première longueur, la première extrémité étant reliée par une première liaison à la partie externe correspondante ainsi qu'une deuxième extrémité présentant une deuxième longueur et reliée par une deuxième liaison au fuselage, chaque partie interne présentant, au niveau de la deuxième extrémité, une hauteur supérieure à la moitié de la hauteur de fuselage, la deuxième longueur de la deuxième extrémité de chaque partie interne étant au moins deux fois supérieure à la première longueur de la première extrémité et supérieure ou égale à la moitié d'une distance séparant les pointes avant et arrière, les première et deuxième extrémités de chaque partie interne étant séparées d'une distance inférieure à la deuxième longueur, chaque partie interne comprenant au moins un réservoir de carburant cylindrique, positionné le long du fuselage et présentant un axe de révolution parallèle à l'axe longitudinal, les réservoirs de carburant cylindriques étant configurés pour stocker de l'hydrogène et, en présence de plusieurs réservoirs de carburant cylindriques dans chaque partie interne, lesdits réservoirs de carburant cylindriques sont positionnés les uns derrière les autres le long du fuselage de manière à ce que leurs axes de révolution soient parallèles à l'axe longitudinal.

Cette solution permet de pouvoir positionner les dispositifs de stockage d'énergie de l'aéronef, notamment les réservoirs de carburant, proches du centre de gravité dans les parties internes grâce à leur hauteur tout en conservant de nombreux composants du fuselage des aéronefs existants (les pointes avant et arrière, les tronçons sans caisson central de voilure) et en les assemblant par une mise en œuvre des procédés d'assemblage connus de l'art antérieur.

Selon une autre caractéristique, chaque tronçon de fuselage comporte une structure de fuselage et une enveloppe aérodynamique de fuselage rapportée sur la structure de fuselage, chaque partie externe comportant une structure de partie externe d'aile ainsi qu'une enveloppe aérodynamique de partie externe d'aile rapportée sur la structure de partie externe d'aile. En complément, chaque partie interne comprend au moins une structure de partie interne d'aile assurant la transmission des efforts entre la structure de partie externe d'aile de la partie externe correspondante et la structure de fuselage ainsi qu'une enveloppe aérodynamique de partie interne d'aile assurant une continuité entre l'enveloppe aérodynamique de partie externe d'aile de la partie externe correspondante et l'enveloppe aérodynamique du fuselage.

Selon une autre caractéristique, au moins une partie des structures de partie interne d'aile des parties internes forment une unique pièce traversant le fuselage et s'étendant de part et d'autre du fuselage.

Selon une autre caractéristique, la structure de partie interne d'aile de chaque partie interne comprend un panneau, positionné dans un plan parallèle à l'axe longitudinal et horizontal ou légèrement incliné par rapport à un plan horizontal, qui s'étend entre les première et deuxième extrémités de chaque partie interne.

Selon une autre caractéristique, la structure de partie interne d'aile de chaque partie interne (comprend plusieurs longerons positionnés dans des plans verticaux, au moins deux longerons étant séparés d'une distance qui augmente de la première extrémité vers la deuxième extrémité.

Selon une autre caractéristique, pour chaque aile, la première liaison comprend une première platine solidaire de la structure de partie externe d'aile et positionnée au niveau de la première extrémité de la partie externe, une deuxième platine solidaire de la structure de partie interne d'aile et positionnée au niveau de la première extrémité de la partie interne ainsi que plusieurs éléments de liaison maintenant plaquées les première et deuxième platines l'une contre l'autre.

Selon une autre caractéristique, chaque réservoir de carburant présente une contenance supérieure à 5 m3.

Selon une autre caractéristique, l'aéronef comprend des dispositifs de stockage d'énergie positionnés à l'intérieur de chacune des parties internes et supportés par les structures de partie interne d'aile des parties internes et positionnés de manière à ce qu'ils ne soient pas impactés en cas d'un basculement latéral ou vers l'arrière de l'aéronef ou en cas d'un atterrissage sur le fuselage.

Selon une autre caractéristique, au moins l'une des parties internes comprend au moins un dispositif de refroidissement comportant au moins un échangeur thermique positionné à l'intérieur de l'enveloppe aérodynamique de partie interne d'aile, au moins un conduit amont relié à l'échangeur thermique et débouchant via au moins une première ouverture orientée vers l'avant, positionnée hors de l'enveloppe aérodynamique de partie interne d'aile et en dessous de la partie interne, ainsi qu'au moins un conduit aval relié à l'échangeur thermique et débouchant via au moins une deuxième ouverture orientée vers l'arrière, positionnée hors de l'enveloppe aérodynamique de partie interne d'aile et au-dessus de la partie interne.

D'autres caractéristiques et avantages ressortiront de la description de l'invention qui va suivre, description donnée à titre d'exemple uniquement, en regard des dessins annexés parmi lesquels :
- La figure 1 est une vue de dessus d'un aéronef illustrant un mode de réalisation de l'art antérieur,
- La figure 2 est une vue en perspective d'un aéronef illustrant un mode de réalisation de l'invention,
- La figure 3 est une vue latérale de l'aéronef visible sur la figure 2,
- La figure 4 est une vue de face de l'aéronef visible sur la figure 2,
- La figure 5 est une vue de dessus de l'aéronef visible sur la figure 2,
- La figure 6 est une représentation schématique des différentes parties d'un aéronef illustrant un mode de réalisation de l'invention,
- La figure 7 est une vue en perspective de l'aéronef visible sur la figure 2, une moitié de l'aéronef étant illustré avant son assemblage, les éléments situés dans cette moitié d'aéronef étant visibles par transparence,
- La figure 8 est une représentation schématique d'une première moitié d'aéronef configurée pour une première capacité de passagers et d'une deuxième moitié d'aéronef configurée pour une deuxième capacité,
- La figure 9 est une vue en perspective d'un aéronef montrant par transparence un agencement des équipements de l'aéronef qui illustre un mode de réalisation de l'invention,
- La figure 10 est une vue en perspective d'un aéronef illustrant un mode de réalisation de l'invention, les enveloppes d'une aile et de la moitié du fuselage étant transparentes, et
- La figure 11 est une vue de dessus d'un aéronef illustrant un mode de réalisation de l'invention, les enveloppes d'une aile et de la moitié du fuselage étant transparentes.

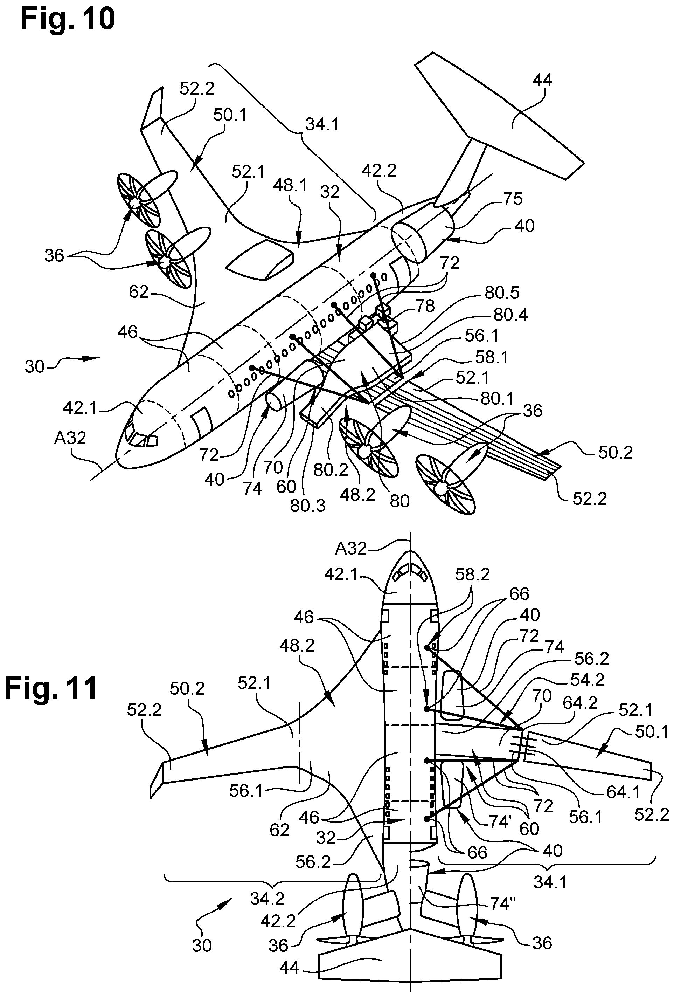

Selon un mode de réalisation visible sur les figures 2 + à 5, un aéronef 30 comprend un fuselage 32, des première et deuxième ailes 34.1, 34.2 positionnées de part et d'autre du fuselage 32 ainsi que des ensembles propulseurs 36 reliés au fuselage 32 ou aux première et deuxième ailes 34.1, 34.2. Selon une configuration visible sur les figures 2 à 5, l'aéronef 30 comprend quatre ensembles propulseurs 36 reliés aux première et deuxième ailes 34.1, 34.2. Selon une autre configuration visible sur la figure 11, l'aéronef 30 comprend deux ensembles propulseurs 36 reliés au fuselage 32.

Selon un mode de réalisation, chaque ensemble propulseur 36 comprend un moteur à hélice 38 électrique ou fonctionnant à l'hydrogène.

Bien entendu, l'invention n'est pas limitée à ces configurations concernant le nombre d'ensembles propulseurs 36, leur emplacement ou le type de motorisation.

Quel que soit le mode de réalisation, l'aéronef 30 comprend plusieurs dispositifs de stockage d'énergie 40, comme des réservoirs de kérosène, des réservoirs d'hydrogène ou des batteries par exemple. Un même aéronef peut prévoir des dispositifs de stockage d'énergie 40 de différentes natures, comme des réservoirs d'hydrogène et des batteries par exemple.

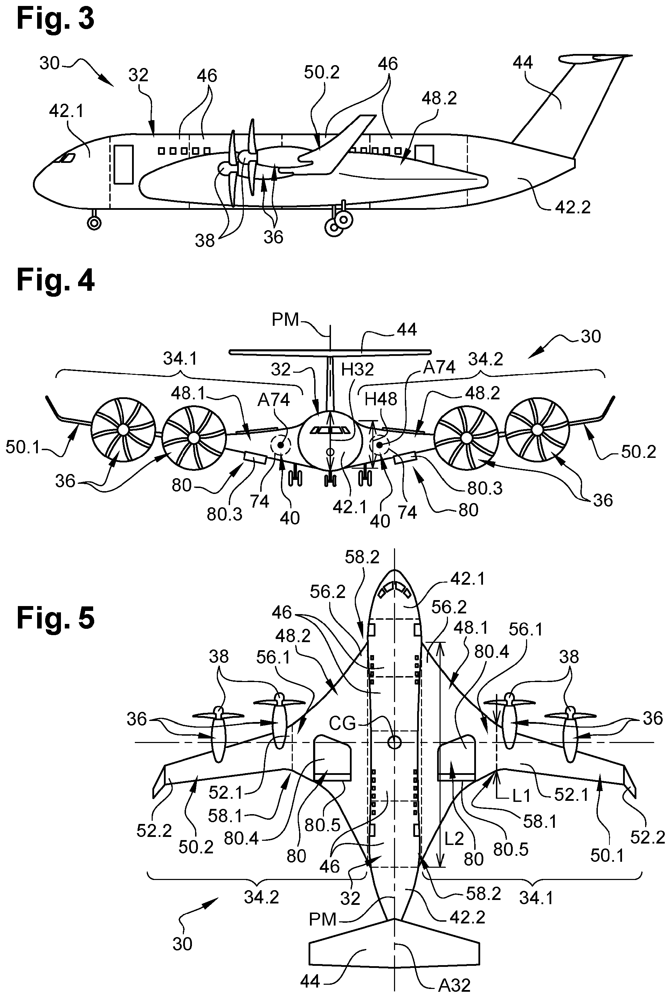

Selon un mode de réalisation visible sur la figure 5, le fuselage 32 comprend une pointe avant 42.1 dans laquelle est positionnée une cabine de pilotage, une pointe arrière 42.2 supportant un empennage 44, ainsi qu'au moins un tronçon 46 approximativement cylindrique positionné entre les pointes avant et arrière 42.1, 42.2. Le fuselage 32 comprend un axe longitudinal A32 qui s'étend entre les pointes avant et arrière 42.1, 42.2, chaque tronçon 46 étant sensiblement coaxial à l'axe longitudinal A32.

Pour la suite de la description, une direction longitudinale est parallèle à l'axe longitudinal A32. Un plan transversal est un plan perpendiculaire à l'axe longitudinal. Un plan médian PM correspond à un plan vertical passant par l'axe longitudinal A32. Une longueur correspond à une dimension prise selon une direction parallèle à la direction longitudinale. Une hauteur correspond à une dimension prise selon une direction verticale.

Généralement, le fuselage 32 comprend plusieurs tronçons 46 qui correspondent à des sous-ensembles du fuselage 32 fabriqués indépendamment les uns des autres, disposés bout à bout et assemblés de manière à former le fuselage 32.

Selon un mode de réalisation, chaque tronçon 46 comprend une structure de fuselage ainsi qu'une enveloppe aérodynamique de fuselage rapportée sur la structure de fuselage. Cette dernière comprend des cadres agencés dans des plans transversaux ainsi que des lisses reliant les cadres et parallèles à la direction longitudinale.

Le fuselage 32 est réalisé en utilisant des procédés d'assemblage connus de l'art antérieur.

Selon une configuration, l'empennage 44 est un empennage en T et comprend une dérive positionnée dans le plan médian PM ainsi que des surfaces de stabilisation horizontales positionnées au niveau de l'extrémité supérieure de la dérive. Bien entendu, l'invention n'est pas limitée à cette configuration pour l'empennage 44.

Selon une caractéristique de l'invention, chaque aile 34.1, 34.2 comprend une partie interne 48.1, 48.2 reliée au fuselage 32 ainsi qu'une partie externe 50.1, 50.2 prolongeant la partie interne 48.1, 48.2. Ainsi, pour chaque aile 34.1, 34.2, la partie interne 48.1, 48.2 relie la partie externe 50.1, 50.2 correspondante et le fuselage 32.

Chaque partie externe 50.1, 50.2 présente une première extrémité 52.1 orientée vers le fuselage 32 ainsi qu'une deuxième extrémité 52.2.

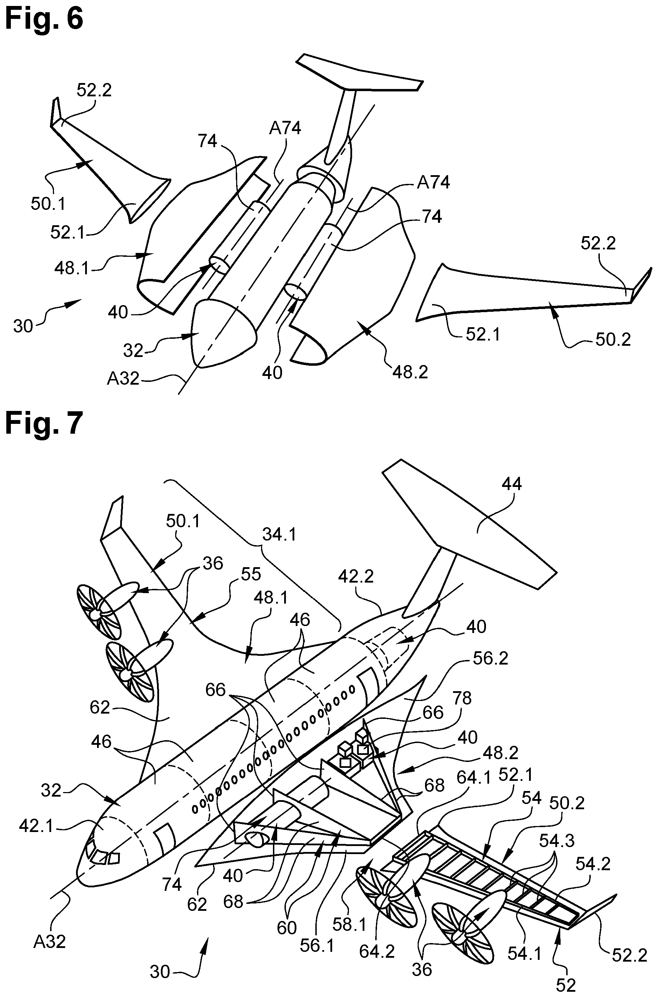

Selon un mode de réalisation visible sur la figure 7, chaque partie externe 50.1, 50.2 comprend une structure de partie externe d'aile 54 ainsi qu'une enveloppe aérodynamique de partie externe d'aile 55 rapportée sur la structure de partie externe d'aile 54. Selon une configuration, la structure de partie externe d'aile 54 de chaque partie externe 50.1, 50.2 comprend des longerons avant et arrière 54.1, 54.2 qui s'étendent sur quasiment toute la longueur de chaque partie externe 50.1, 50.2 ainsi que des nervures 54.3 reliant les longerons avant et arrière 54.1, 54.2.

Les parties externes 50.1, 50.2 sont réalisées en utilisant des procédés d'assemblage connus de l'art antérieur.

Comme pour l'art antérieur, la première extrémité 52.1 des parties externes 50.1, 50.2 présente une longueur sensiblement égale à celle d'une aile de l'art antérieur.

Selon un mode de réalisation, les parties externes 50.1, 50.2 n'intègrent pas de réservoirs de carburant. Dans ce cas, les parties externes 50.1, 50.2 présentent une hauteur inférieure aux ailes des aéronefs de l'art antérieur. Ce mode de réalisation permet de simplifier la fabrication des parties externes 50.1, 50.2 et d'en réduire les coûts. Cependant, pour augmenter le rayon d'action de l'aéronef, les parties externes 50.1, 50.2 peuvent chacune comprendre au moins un réservoir de carburant, comme pour l'art antérieur.

Bien entendu, l'invention n'est pas limitée à ce mode de réalisation pour les parties externes 50.1, 50.2.

Selon une caractéristique de l'invention, chaque partie interne 48.1, 48.2 comprend une première extrémité 56.1 reliée par une première liaison 58.1 à la partie externe 50.1, 50.2 correspondante ainsi qu'une deuxième extrémité 56.2 reliée par une deuxième liaison 58.2 au fuselage 32. La deuxième extrémité 56.2 présente une deuxième longueur L2 au moins deux fois supérieure à la première longueur L1 de la première extrémité 56.1. La distance séparant les première et deuxième extrémités 56.1, 56.2 est inférieure à la deuxième longueur L2 de la deuxième extrémité 56.2. Les parties internes 48.1, 48.2 présentent au niveau de la deuxième extrémité 56.2 une hauteur H48 supérieure à la moitié de la hauteur H32 du fuselage.

Les première et deuxième extrémités 56.1, 56.2 sont séparées d'une distance inférieure à la deuxième longueur L2.

Selon une caractéristique de l'invention, la deuxième extrémité 56.2 s'étend sur une longueur supérieure ou égale à une moitié de la distance séparant les pointes avant et arrière 42.1, 42.2. Ainsi, chaque partie interne 48.1, 48.2 est reliée à la structure de fuselage de plusieurs tronçons 46 sur une grande longueur, ce qui permet une meilleure répartition des efforts.

Chaque partie interne 48.1, 48.2 comprend au moins une structure de partie interne d'aile 60 assurant la transmission des efforts entre la structure de partie externe d'aile 54 de la partie externe 50.1, 50.2 et la structure de fuselage du fuselage 32 ainsi qu'une enveloppe aérodynamique de partie interne d'aile 62 assurant une continuité entre l'enveloppe aérodynamique de partie externe d'aile 55 de la partie externe 50.1, 50.2 et l'enveloppe aérodynamique du fuselage 32.

Selon un mode de réalisation, la deuxième liaison 58.2 comprend plusieurs points d'ancrage 66 répartis sur la longueur du fuselage 32 et positionnés au niveau de la structure de fuselage de chaque tronçon 46, plus particulièrement au niveau des cadres de la structure de fuselage. Selon une configuration visible sur la figure 7, la première liaison 58.1 comprend une première platine 64.1 solidaire de la structure de partie externe d'aile 54, positionnée au niveau de la première extrémité 52.1 de la partie externe 50.1, 50.2, dans un plan approximativement vertical et parallèle à la direction longitudinale, une deuxième platine 64.2 solidaire de la structure de partie interne d'aile 60 et positionnée au niveau de la première extrémité 56.1 de la partie interne 48.1, 48.2, dans un plan approximativement vertical et parallèle à la direction longitudinale, ainsi que plusieurs éléments de liaison, comme des boulons par exemple, maintenant plaquées les première et deuxième platines 64.1, 64.2 l'une contre l'autre.

Bien entendu, l'invention n'est pas limitée à ce mode de réalisation pour la première liaison 58.1. D'autres solutions sont envisageables.

Selon un premier mode de réalisation visible sur la figure 7, la structure de partie interne d'aile 60 comprend plusieurs longerons 68 positionnés dans des plans verticaux s'étendant entre les première et deuxième extrémités 56.1, 56.2 de chaque partie interne 48.1, 48.2, au moins deux longerons 68 étant séparés d'une distance qui augmente de la première extrémité 56.1 vers la deuxième extrémité 56.2. Selon une configuration, les longerons 68 présentent une première extrémité reliée à la deuxième platine 64.2 ainsi qu'une deuxième extrémité reliée par des éléments de liaison, comme des boulons par exemple, à la structure de fuselage et plus particulièrement aux cadres du fuselage 32.

Selon un deuxième mode de réalisation visible sur les figures 10 et 11, la structure de partie interne d'aile 60 comprend un panneau 70 positionné dans un plan parallèle à l'axe longitudinal A32 et horizontal ou légèrement incliné par rapport à un plan horizontal qui s'étend entre les première et deuxième extrémités 56.1, 56.2 de chaque partie interne 48.1, 48.2. Selon une configuration, le panneau 70 est renforcé par un réseau de nervures. En complément, la structure de partie interne d'aile 60 peut comprendre des bielles 72 présentant une première extrémité reliée au panneau 70 au niveau de la première extrémité 56.1 de la partie interne 48.1, 48.2 et une deuxième extrémité reliée à la structure de fuselage, par exemple à un des cadres, en un point d'ancrage 66 distant du panneau 70.

Selon une configuration, les panneaux 70 des parties internes 48.1, 48.2 forment une unique et même pièce qui traverse le fuselage 32 et s'étend de part et d'autre de ce dernier.

Ainsi, pour certains modes de réalisation, une structure peut traverser le fuselage 32 et s'étendre de part et d'autre de ce dernier afin de former au moins partiellement la structure de partie interne d'aile 60 des parties internes 48.1, 48.2.

Selon une configuration, la deuxième liaison 58.2 est configurée pour se rompre en priorité en cas d'accident afin que les parties internes 48.1, 48.2 se détachent du fuselage 32 pour renforcer la sécurité des passagers.

Bien entendu, l'invention n'est pas limitée à ces modes de réalisation pour les structures de partie interne d'aile 60 ainsi que les première et deuxième liaisons 58.1, 58.2 des parties internes 48.1, 48.2.

Chaque enveloppe aérodynamique de partie interne d'aile 62 présente une hauteur au niveau du fuselage 32 nettement supérieure à sa hauteur au niveau de la partie externe 50.1, 50.2. Ainsi, les enveloppes aérodynamiques de partie interne d'aile 62 des parties internes 48.1, 48.2 offrent deux volumes importants de part et d'autre du fuselage 32, à proximité de ce dernier, dans lesquels peuvent être stockés des éléments ou des équipements de l'aéronef 30.

Selon un mode de réalisation, chaque partie interne 48.1, 48.2 comprend au moins un dispositif de stockage d'énergie 40 positionné dans l'enveloppe aérodynamique de partie interne d'aile 62.

Selon une configuration, le dispositif de stockage d'énergie 40 comprend au moins un élément parmi au moins un réservoir de carburant 74, au moins une batterie 76 ou au moins une pile à combustible 78.

Selon l'invention, comme illustré sur la figure 6, chaque partie interne 48.1, 48.2 comprend un réservoir de carburant 74 configuré pour stocker de l'hydrogène. Ce réservoir de carburant 74 est cylindrique, positionné le long du fuselage 32 (le jouxtant) et présente un axe de révolution A74 parallèle à l'axe longitudinal A32.

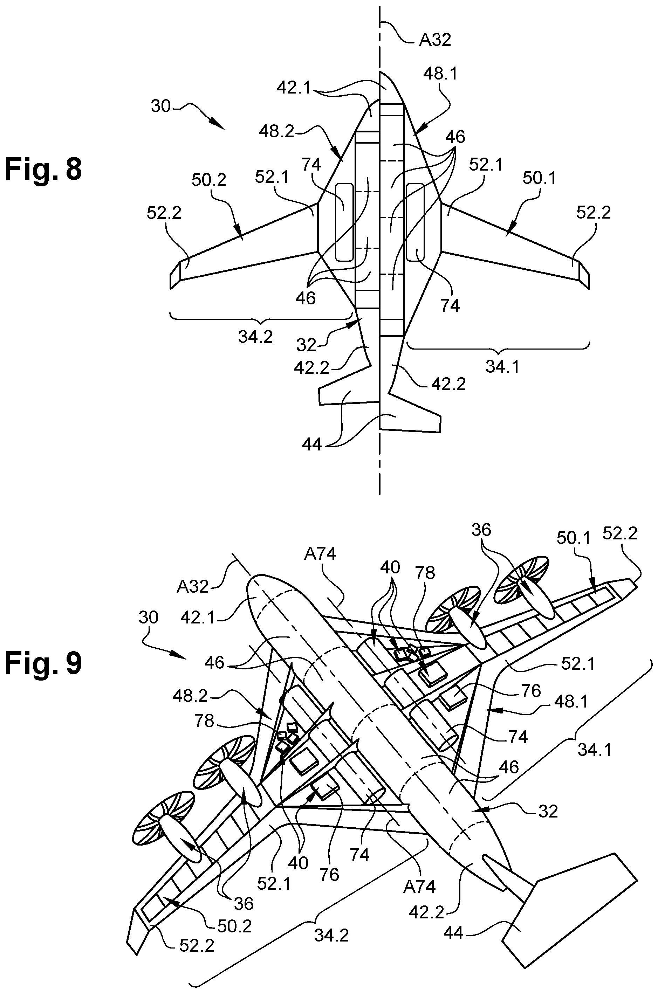

Selon une autre configuration visible sur les figures 7 et 9, chaque partie interne 48.1, 48.2 comprend un réservoir de carburant 74 positionné le long du fuselage 32 ainsi que des piles à combustible 78 positionnées le long du fuselage 32 et décalées vers l'arrière par rapport au réservoir de carburant 74. Comme précédemment, le réservoir de carburant 74 est cylindrique, configuré pour stocker de l'hydrogène et positionné de manière à ce que son axe de révolution A74 soit parallèle à l'axe longitudinal A32.

Selon une autre configuration visible sur la figure 9, chaque partie interne 48.1, 48.2 comprend un réservoir de carburant 74 positionné le long du fuselage 32 ainsi que des piles à combustible 78 écartées du fuselage 32, le réservoir de carburant 74 étant positionné entre le fuselage 32 et les piles à combustible 78.

Selon une autre configuration visible sur la figure 11, chaque partie interne 48.1, 48.2 comprend plusieurs réservoirs de carburant 74, 74' cylindriques, configurés pour stocker de l'hydrogène, positionnés les uns derrière les autres le long du fuselage 32 de manière à ce que leurs axes de révolution A74 soient parallèles à l'axe longitudinal A32. A titre indicatif, les réservoirs de carburant 74, 74' ont une contenance supérieure ou égale à 5 m3.

Quelle que soit la configuration, les dispositifs de stockage d'énergie 40 sont positionnés à proximité du fuselage 32 dans les parties internes 48.1, 48.2 des ailes 34.1, 34.2 qui présentent une faible flèche, ce qui tend à limiter l'impact sur la position du centre de gravité CG de l'aéronef et sur sa stabilité, notamment lorsque le niveau du carburant dans les réservoirs de carburant 74, 74' varie en fonctionnement.

Selon un agencement, les dispositifs de stockage d'énergie 40 sont supportés par les structures de partie interne d'aile 60 des parties internes 48.1, 48.2 et positionnés de manière à ce qu'ils ne soient pas impactés en cas de basculement latéral ou vers l'arrière de l'aéronef, en cas d'atterrissage sur le fuselage 32 ou en cas d'éclatement d'une jante ou d'un pneu d'un train d'atterrissage.

Bien entendu, l'invention n'est pas limitée à ces configurations pour les dispositifs de stockage d'énergie 40. Ainsi, pour augmenter la quantité de carburant embarquée, il est possible de prévoir un réservoir de carburant 75' dans le fuselage 32, par exemple dans la pointe arrière 42.2.

Selon un mode de réalisation, au moins l'une des parties internes 48.1, 48.2 comprend au moins un dispositif de refroidissement 80 configuré pour refroidir un équipement comme les piles à combustible 78. Selon une configuration, le dispositif de refroidissement 80 comprend au moins un échangeur thermique 80.1 positionné à l'intérieur de l'enveloppe aérodynamique de partie interne d'aile 62, au moins un conduit amont 80.2 relié à l'échangeur thermique 80.1 et débouchant via au moins une première ouverture 80.3 orientée vers l'avant, positionnée hors de l'enveloppe aérodynamique de partie interne d'aile 62 et en dessous de la partie interne 48.1, 48.2, ainsi qu'au moins un conduit aval 80.4 relié à l'échangeur thermique 80.1 et débouchant via au moins une deuxième ouverture 80.5 orientée vers l'arrière, positionnée hors de l'enveloppe aérodynamique de partie interne d'aile 62 et au-dessus de la partie interne 48.1, 48.2.

Selon un avantage procuré par l'invention, les première et deuxième parties internes 48.1, 48.2 offrent deux volumes importants dans lesquels peuvent être regroupés de nombreux équipements. Cette configuration simplifie l'installation et la maintenance de ces équipements du fait qu'ils soient regroupés et non disséminés dans l'aéronef. Le fait de regrouper les équipements permet également de réduire la masse embarquée en limitant la longueur des liaisons entre les différents équipements.

Selon un autre avantage, il est possible d'utiliser de nombreux composants du fuselage des aéronefs existants, comme les pointes avant et arrière, les tronçons sans caisson central de voilure par exemple, et de les assembler en utilisant des procédés d'assemblage connus de l'art antérieur. Ainsi, les chaînes d'assemblage des aéronefs existants peuvent être largement réutilisées.

Le fait de relier la voilure à plusieurs tronçons permet de répartir la reprise des efforts et de ne pas la concentrer sur un seul tronçon.

Selon un autre avantage, les parties externes 50.1, 50.2 des ailes 34.1, 34.2 sont simplifiées dans la mesure où elles n'intègrent plus de réservoirs de carburant. Indifféremment, elles peuvent être assemblées aux parties internes 18.1, 48.2 avant ou après que ces dernières soient fixées au fuselage 32.

Enfin, il est possible de concevoir, sur la même base, des aéronefs de différentes capacités pour les passagers, comme illustré sur la figure 8. Ainsi, à l'exception du nombre de tronçons et des parties internes 48.1, 48.2, tous les autres éléments de l'aéronef sont identiques et peuvent être assemblés de la même manière quelle que soit la capacité de l'aéronef.

## Revendications

1. Aéronef comprenant un fuselage (32), des première et deuxième ailes (34.1, 34.2) positionnées de part et d'autre du fuselage (32), le fuselage (32) présentant un axe longitudinal (A32), le fuselage (32) comprenant une pointe avant (42.1), une pointe arrière (42.2) supportant un empennage ainsi qu'au moins un tronçon (46) approximativement cylindrique présentant une hauteur correspondant à une hauteur de fuselage (H32), ledit tronçon (46) étant positionné entre les pointes avant et arrière (42.1, 42.2), chaque aile (34.1, 34.2) comprenant une partie interne (48.1, 48.2) et une partie externe (50.1, 50.2) telles que chaque partie interne (50.1, 50.2) relie la partie externe (50.1, 50.2) correspondante et le fuselage (32), chaque partie interne (48.1, 48.2) comprenant une première extrémité (56.1) qui présente une première longueur (L1), la première extrémité (56.1) étant reliée par une première liaison (58.1) à la partie externe (50.1, 50.2) correspondante ainsi qu'une deuxième extrémité (56.2) présentant une deuxième longueur (L2) et reliée par une deuxième liaison (58.2) au fuselage (32), chaque partie interne (48.1, 48.2) présentant, au niveau de la deuxième extrémité (56.2), une hauteur (H48) supérieure à la moitié de la hauteur de fuselage (H32), la deuxième longueur (L2) de la deuxième extrémité (56.2) de chaque partie interne (48.1, 48.2) étant au moins deux fois supérieure à la première longueur (L1) de la première extrémité (56.1) et supérieure ou égale à la moitié d'une distance séparant les pointes avant et arrière (42.1, 42.2), les première et deuxième extrémités (56.1, 56.2) de chaque partie interne (48.1, 48.2) étant séparées d'une distance inférieure à la deuxième longueur (L2), **caractérisé en ce que** chaque partie interne (48.1, 48.2) comprend au moins un réservoir de carburant (74, 74') cylindrique, positionné le long du fuselage (32) et présentant un axe de révolution (A74) parallèle à l'axe longitudinal (A32), les réservoirs de carburant cylindriques étant configurés pour stocker de l'hydrogène et **en ce que**, en présence de plusieurs réservoirs de carburant cylindriques (74, 74') dans chaque partie interne (48.1, 48.2), lesdits réservoirs de carburant cylindriques (74, 74') sont positionnés les uns derrière les autres le long du fuselage (32) de manière à ce que leurs axes de révolution (A74) soient parallèles à l'axe longitudinal (A32).

2. Aéronef selon la revendication 1, **caractérisé en ce que** chaque tronçon (46) de fuselage comporte une structure de fuselage et une enveloppe aérodynamique de fuselage rapportée sur la structure de fuselage, **en ce que** chaque partie externe (50.1, 50.2) comporte une structure de partie externe d'aile (54) et une enveloppe aérodynamique de partie externe d'aile (55) rapportée sur la structure de partie externe d'aile (54) et **en ce que** chaque partie interne (48.1, 48.2) comprend au moins une structure de partie interne d'aile (60) assurant la transmission des efforts entre la structure de partie externe d'aile (54) de la partie externe (50.1, 50.2) correspondante et la structure de fuselage ainsi qu'une enveloppe aérodynamique de partie interne d'aile (62) assurant une continuité entre l'enveloppe aérodynamique de partie externe d'aile (55) de la partie externe (50.1, 50.2) correspondante et l'enveloppe aérodynamique du fuselage (32).

3. Aéronef selon la revendication 2, **caractérisé en ce qu'**au moins une partie des structures de partie interne d'aile (60) des parties internes (48.1, 48.2) forment une unique pièce traversant le fuselage (32) et s'étendant de part et d'autre du fuselage (32).

4. Aéronef selon l'une des revendications 2 à 3, **caractérisé en ce que** la structure de partie interne d'aile (60) de chaque partie interne (48.1, 48.2) comprend un panneau (70), positionné dans un plan parallèle à l'axe longitudinal (A32) et horizontal ou légèrement incliné par rapport à un plan horizontal, qui s'étend entre les première et deuxième extrémités (56.1, 56.2) de chaque partie interne (48.1, 48.2).

5. Aéronef selon la revendication 2, **caractérisé en ce que** la structure de partie interne d'aile (60) de chaque partie interne (48.1, 48.2) comprend plusieurs longerons (68) positionnés dans des plans verticaux, au moins deux longerons (68) étant séparés d'une distance qui augmente de la première extrémité (56.1) vers la deuxième extrémité (56.2).

6. Aéronef selon l'une des revendications 2 à 5, **caractérisé en ce que**, pour chaque aile (34.1, 34.2), la première liaison (58.1) comprend une première platine (64.1) solidaire de la structure de partie externe d'aile (54) et positionnée au niveau de la première extrémité (56.1) de la partie externe (50.1, 50.2), une deuxième platine (64.2) solidaire de la structure de partie interne d'aile (60) et positionnée au niveau de la première extrémité (56.1) de la partie interne (48.1, 48.2) ainsi que plusieurs éléments de liaison maintenant plaquées les première et deuxième platines (64.1, 64.2) l'une contre l'autre.

7. Aéronef selon l'une des revendications précédentes, **caractérisé en ce que** chaque réservoir de carburant (74, 74') présente une contenance supérieure à 5 m3.

8. Aéronef selon l'une des revendications 2 et 7, **caractérisé en ce que** l'aéronef comprend des dispositifs de stockage d'énergie (40) positionnés à l'intérieur de chacune des parties internes (48.1, 48.2) et supportés par les structures de partie interne d'aile (60) des parties internes (48.1, 48.2) et positionnés de manière à ce qu'ils ne soient pas impactés en cas d'un basculement latéral ou vers l'arrière de l'aéronef ou en cas d'un atterrissage sur le fuselage (32).

9. Aéronef selon l'une des revendications 2 à 8, **caractérisé en ce qu'**au moins l'une des parties internes (48.1, 48.2) comprend au moins un dispositif de refroidissement (80) comportant au moins un échangeur thermique (80.1) positionné à l'intérieur de l'enveloppe aérodynamique de partie interne d'aile (62), au moins un conduit amont (80.2) relié à l'échangeur thermique (80.1) et débouchant via au moins une première ouverture (80.3) orientée vers l'avant, positionnée hors de l'enveloppe aérodynamique de partie interne d'aile (62) et en dessous de la partie interne (48.1, 48.2), ainsi qu'au moins un conduit aval (80.4) relié à l'échangeur thermique (80.1) et débouchant via au moins une deuxième ouverture (80.5) orientée vers l'arrière, positionnée hors de l'enveloppe aérodynamique de partie interne d'aile (62) et au-dessus de la partie interne (48.1, 48.2).

## Patentansprüche

1. Luftfahrzeug mit einem Rumpf (32), einem ersten und einem zweiten Flügel (34.1, 34.2), die beiderseits des Rumpfes (32) angeordnet sind, wobei der Rumpf (32) eine Längsachse (A32) aufweist und der Rumpf (32) eine vordere Spitze (42.1), eine hintere Spitze (42.2), die ein Leitwerk trägt, sowie wenigstens einen annähernd zylindrischen Abschnitt (46) aufweist, dessen Höhe einer Rumpfhöhe (H32) entspricht, wobei der Abschnitt (46) zwischen der vorderen und der hinteren Spitze (42.1, 42.2) angeordnet ist, wobei jeder Flügel (34.1, 34.2) einen Innenteil (48.1, 48.2) und einen Außenteil (50.1, 50.2) aufweist, sodass jeder Innenteil (50.1, 50.2) den entsprechenden Außenteil (50.1, 50.2) mit dem Rumpf (32) verbindet, wobei jeder Innenteil (48.1, 48.2) ein erstes Ende (56.1) aufweist, das eine erste Länge (L1) aufweist, wobei das erste Ende (56.1) über eine erste Verbindung (58.1) mit dem entsprechenden Außenteil (50.1, 50.2) verbunden ist, sowie ein zweites Ende (56.2), das eine zweite Länge (L2) aufweist und über eine zweite Verbindung (58.2) mit dem Rumpf (32) verbunden ist, wobei jeder Innnenteil (48.1, 48.2) im Bereich des zweiten Endes (56.2) eine Höhe (H48) aufweist, die größer ist als die Hälfte der Rumpfhöhe (H32), wobei die zweite Länge (L2) des zweiten Endes (56.2) jedes Innenteils (48.1, 48.2) wenigstens doppelt so groß ist wie die erste Länge (L1) des ersten Endes (56.1) und größer oder gleich der Hälfte eines Abstands zwischen den vorderen und hinteren Spitzen (42.1, 42.2) ist, wobei das erste und das zweite Ende (56.1, 56.2) jedes Innenteils (48.1, 48.2) durch einen Abstand voneinander getrennt sind, der kleiner ist als die zweite Länge (L2), **dadurch gekennzeichnet, dass** jedes Innenteil (48.1, 48.2) wenigstens einen zylindrischen Kraftstofftank (74, 74') umfasst, der entlang des Rumpfes (32) angeordnet ist und eine zur Längsachse (A32) parallele Rotationsachse (A74) aufweist, wobei die zylindrischen Kraftstofftanks dazu eingerichtet sind, Wasserstoff zu speichern, und dass bei Vorhandensein mehrerer zylindrischer Kraftstofftanks (74, 74') in jedem Innenteil (48.1, 48.2) die genannten zylindrischen Kraftstofftanks (74, 74') entlang des Rumpfes (32) hintereinander angeordnet sind, sodass ihre Rotationsachsen (A74) parallel zur Längsachse (A32) verlaufen.

2. Luftfahrzeug nach Anspruch 1, **dadurch gekennzeichnet, dass** jeder Abschnitt (46) des Rumpfes eine Rumpfstruktur und eine auf die Rumpfstruktur aufgesetzte aerodynamische Rumpfhülle aufweist, dass jeder Außenteil (50.1, 50.2) eine Außenteilflügelstruktur (54) und eine auf die Außenteilflügelstruktur (54) aufgesetzte aerodynamische Außenteilflügelhülle (55) aufweist und dass jeder Innenteil (48.1, 48.2) wenigstens eine Innenteilflügelstruktur (60) aufweist, die die Kraftübertragung zwischen der Außenteilflügelstruktur (54) des entsprechenden Außenteils (50.1, 50.2) und der Rumpfstruktur gewährleistet, sowie eine aerodynamische Innenteilflügelhülle (62), die eine Kontinuität zwischen der aerodynamischen Außenteilflügelhülle (55) des Außenteils (50.1, 50.2) und der aerodynamischen Rumpfhülle (32) gewährleistet.

3. Luftfahrzeug nach Anspruch 2, **dadurch gekennzeichnet, dass** wenigstens ein Teil der Innenteilflügelstrukturen (60) der Innenteile (48.1, 48.2) ein einziges Teil bildet, das den Rumpf (32) durchquert und sich zu beiden Seiten des Rumpfs (32) erstreckt.

4. Luftfahrzeug nach einem der Ansprüche 2 bis 3, **dadurch gekennzeichnet, dass** die Innenteilflügelstrukturen (60) jedes Innenteils (48.1, 48.2) eine Platte (70) aufweist, die in einer zur Längsachse (A32) parallelen Ebene angeordnet ist und horizontal oder leicht geneigt zu einer horizontalen Ebene verläuft, wobei sie sich zwischen dem ersten und dem zweiten Ende (56.1, 56.2) jedes Innenteils (48.1, 48.2) erstreckt.

5. Luftfahrzeug nach Anspruch 2, **dadurch gekennzeichnet, dass** die Innenteilflügelstruktur (60) jedes Innenteils (48.1, 48.2) mehrere in vertikalen Ebenen angeordnete Längsträger (68) aufweisen, wobei wenigstens zwei Längsträger (68) durch einen Abstand voneinander getrennt sind, der vom ersten Ende (56.1) zum zweiten Ende (56.2) hin zunimmt.

6. Luftfahrzeug nach einem der Ansprüche 2 bis 5, **dadurch gekennzeichnet, dass** für jeden Flügel (34.1, 34.2) die erste Verbindung (58.1) eine erste Platte (64.1) aufweist, die fest mit der Außenteilflügelstruktur (54) verbunden ist und im Bereich des ersten Endes (56.1) des Außenteils (50.1, 50.2) angeordnet ist, eine zweite Platte (64.2), die fest mit der Innenteilflügelstruktur (60) verbunden ist und im Bereich des ersten Endes (56.1) des Innenteils (48.1, 48.2) angeordnet ist, sowie mehrere Verbindungselemente, die die erste und die zweite Platte (64.1, 64.2) fest aneinander ansetzen.

7. Luftfahrzeug nach einem der vorstehenden Ansprüche, **dadurch gekennzeichnet, dass** jeder Treibstofftank (74, 74') ein Fassungsvermögen von mehr als 5 m³ aufweist.

8. Luftfahrzeug nach einem der Ansprüche 2 und 7, **dadurch gekennzeichnet, dass** das Luftfahrzeug Energiespeichervorrichtungen (40) aufweist, die im Inneren jedes der Innenteile (48.1, 48.2) angeordnet sind und von den Innenteilflügelstrukturen (60) der Innenteile (48.1, 48.2) getragen werden und so angeordnet sind, dass sie im Falle einer seitlichen oder rückwärtigen Kippbewegung des Luftfahrzeugs oder im Falle einer Landung auf dem Rumpf (32) nicht beeinträchtigt werden.

9. Luftfahrzeug nach einem der Ansprüche 2 bis 8, **dadurch gekennzeichnet, dass** wenigstens einer der Innenteile (48.1, 48.2) wenigstens eine Kühlvorrichtung (80) aufweist, die wenigstens einen Wärmetauscher (80.1) umfasst, der innerhalb der aerodynamischen Innenteilflügelhülle (62) angeordnet ist, wenigstens einen stromaufwärtigen Kanal (80.2), der mit dem Wärmetauscher (80.1) verbunden ist und in wenigstens eine erste, nach vorne gerichtete Öffnung (80.3) mündet, die außerhalb der aerodynamischen Innenteilflügelhülle (62) und unterhalb des Innenteils (48.1, 48.2) angeordnet ist, sowie wenigstens einen stromabwärts gelegenen Kanal (80.4) umfasst, der mit dem Wärmetauscher (80.1) verbunden ist und in wenigstens eine zweite, nach hinten gerichtete Öffnung (80.5) mündet, die außerhalb der aerodynamischen Innenteilflügelhülle (62) und oberhalb des Innenteils (48.1, 48.2) angeordnet ist.

## Claims

1. Aircraft comprising a fuselage (32), first and second wings (34.1, 34.2) positioned on either side of the fuselage (32), the fuselage (32) having a longitudinal axis (A32), the fuselage (32) comprising a noise (42.1), a tail (42.2) supporting a tail assembly and at least one substantially cylindrical fuselage portion (46) having a height corresponding to a fuselage height (H32), said fuselage portion (46) being positioned between the noise and the tail (42.1, 42.2), each wing (34.1, 34.2) comprising an inner part (48.1, 48.2) and an outer part (50.1, 50.2) such that each inner part (48.1, 48.2) connects the corresponding outer part (50.1, 50.2) and the fuselage (32), each inner part (48.1, 48.2) comprising a first end (56.1) which has a first length (L1), the first end (56.1) being connected by a first connection (58.1) to the corresponding outer part (50.1, 50.2) and a second end (56.2) having a second length (L2) and connected by a second connection (58.2) to the fuselage (32), each inner part (48.1, 48.2) having, at the second end (56.2), a height (H48) greater than half the height of the fuselage (H32), the second length (L2) of the second end (56.2) of each inner part (48.1, 48.2) being at least twice the first length (L1) of the first end (56.1) and greater than or equal to half the distance separating the noise and the tail (42.1, 42.2), the first and second ends (56.1, 56.2) of each inner part (48.1, 48.2) being separated by a distance less than the second length (L2), **characterized in that** each inner part (48.1, 48.2) comprises at least one cylindrical fuel tank (74, 74') positioned along the fuselage (32) and having an axis of revolution (A74) parallel to the longitudinal axis (A32), the cylindrical fuel tanks being configured to store hydrogen and **in that**, when a plurality of cylindrical fuel tanks are provided in each inner part (48.1, 48.2), said cylindrical fuel tanks (74, 74') are positioned one behind the other along the fuselage (32) such that their axes of revolution (A74) are parallel to the longitudinal axis (A32).

2. Aircraft as claimed in claim 1, wherein each fuselage portion (46) has a fuselage structure and an aerodynamic fuselage envelope fitted on the fuselage structure, wherein each outer part (50.1, 50.2) has a wing outer part structure (54) and an aerodynamic wing outer part envelope (55) fitted on the wing outer part structure (54) and wherein each inner part (48.1, 48.2) comprises at least one wing inner part structure (60) ensuring the transmission of forces between the wing outer part structure (54) of the corresponding outer part (50.1, 50.2) and the fuselage structure, and an aerodynamic wing inner part envelope (62) ensuring that the aerodynamic wing outer part envelope (55) of the corresponding outer part (50.1, 50.2) and the aerodynamic fuselage envelope (32) are continuous.

3. Aircraft as claimed in claim 2, wherein at least part of the wing inner part structures (60) of the inner parts (48.1, 48.2) forms a single piece passing through the fuselage (32) and extending on either side of the fuselage (32).

4. Aircraft as claimed in one of the claims 2 to 3, wherein the wing inner part structure (60) of each inner part (48.1, 48.2) comprises a panel (70), positioned in a plane parallel to the longitudinal axis (A32) and horizontal or slightly inclined with respect to a horizontal plane, which extends between the first and second ends (56.1, 56.2) of each inner part (48.1, 48.2).

5. Aircraft as claimed in claim 2, wherein the wing inner part structure (60) of each inner part (48.1, 48.2) comprises multiple spars (68) positioned in vertical planes, at least two spars (68) being separated by a distance which increases from the first end (56.1) toward the second end (56.2).

6. Aircraft as claimed in one of the claims 2 to 5, wherein, for each wing (34.1, 34.2), the first connection (58.1) comprises a first plate (64.1) integral with the wing outer part structure (54) and positioned at the first end (56.1) of the outer part (50.1, 50.2), a second plate (64.2) integral with the wing inner part structure (60) and positioned at the first end (56.1) of the inner part (48.1, 48.2), and multiple connection elements keeping the first and second plates (64.1, 64.2) pressed against one another.

7. Aircraft as claimed in one of the preceding claims, wherein each fuel tank (74, 74') has a volume of greater than 5 m3.

8. Aircraft as claimed in one of the claims 2 and 7, wherein the aircraft comprises energy storage devices (40) positioned inside each of the inner parts (48.1, 48.2) and supported by the wing inner part structures (60) of the inner parts (48.1, 48.2) and positioned such that they are not affected in the event of lateral or rearward tilting of the aircraft or in the event of a landing on the fuselage (32).

9. Aircraft as claimed in one of the claims 2 to 8, wherein at least one of the inner parts (48.1, 48.2) comprises at least one cooling device (80) having at least one heat exchanger (80.1) positioned inside the aerodynamic wing inner part envelope (62), at least one upstream duct (80.2) connected to the heat exchanger (80.1) and opening out via at least one forward-facing first opening (80.3) positioned outside of the aerodynamic wing inner part envelope (62) and below the inner part (48.1, 48.2), and at least one downstream duct (80.4) connected to the heat exchanger (80.1) and opening out via at least one rearward-facing second opening (80.5) positioned outside of the aerodynamic wing inner part envelope (62) and above the inner part (48.1, 48.2).
